# FASCICULE DE BREVET EUROPEEN

(11) **EP 2 450 761 B1**
(45) Date de publication et mention de la délivrance du brevet: **17.07.2013**
(21) Numéro de dépôt: 11187220.6
(22) Date de dépôt: 31.10.2011
(51) Int. Cl.: G05B 19/416

(54) **Dispositif et prócéde d'entraînement d'un élément de fermeture comportant un moteur pas a pas**
Gerät und Verfahren zum Ansteuern einer Schließvorrichtung umfassend einen Schrittmotor.
Apparatus and process for diving a closing device comprising a stepper motor

(30) Priorité: 05.11.2010 FR 1059161
(43) Date de publication de la demande: 09.05.2012
(73) Titulaire: Compliss, 78440 Gargenville (FR)
(72) Inventeur: Bachmatiuk, Michel, 78440 Issou (FR)
(74) Mandataire: Aupetit, Muriel J. C.

(56) Documents cités:
- GB-A- 2 105 871
- GB-A- 2 203 262
- US-A- 4 511 832
- US-A- 6 013 999
- US-A- 6 150 789
- US-A1- 2004 113 581
- "New Power-Efficient Stepper Motor Control", Marshall Space Flight CenterTechnology Transfer Program , 27 mars 2001 (2001-03-27), pages 1-2, XP002640632, Extrait de l'Internet: URL:http://techtran.msfc.nasa.gov/tech_ops /motorcontrol.pdf [extrait le 2011-06-08]

## Description

L'invention concerne un dispositif d'entraînement d'un dispositif de fermeture motorisé. Plus particulièrement, l'invention se rapporte à un dispositif d'entraînement d'un dispositif de fermeture et d'ouverture d'une construction comportant une porte du type porte de garage destinée à basculer d'une position verticale à une position horizontale pour obstruer ou non un passage.

Il est connu dans l'état de la technique des portes basculantes qui obstruent un passage en position verticale et basculent dans une position horizontale afin de libérer ledit passage. Ces portes sont par exemple destinées aux garages, privés ou publics, et sont généralement automatisées afin de laisser passer les voitures sans obliger un conducteur à descendre du véhicule pour ouvrir puis refermer la porte. En position ouverte et horizontale, la porte est généralement parallèle à un plafond le long duquel elle bascule pour libérer le passage.

Le basculement de la porte est généralement obtenu par son coulissement le long de rails de guidage latéraux qui sont montés sur un chambranle de porte. Pour faciliter le basculement et afin que la porte reste horizontale malgré le poids de la porte, on utilise de manière connue un système de traction relié à la porte permettant de contre balancer le poids de la porte, par exemple un contrepoids ou encore un système de ressorts.

L'automatisation du déplacement de la porte est obtenue par l'utilisation d'un moteur lié à la porte. Les moteurs utilisés sont généralement des moteurs asynchrones à courant continu ou encore des moteurs sans balai (en anglais, moteur « brushless »). Ces moteurs fournissent une force d'entraînement apte à faire basculer la porte dans un sens ou dans l'autre. Lorsqu'une rotation de l'arbre est sollicitée, l'intensité du courant varie d'une amplitude plus ou moins significative selon le type de moteur utilisé et le couple développé par le moteur apte à entraîner la porte.

Cependant, les efforts d'entraînement nécessaires en ouverture ou fermeture de la porte sont différents tout au long du processus du basculement. En effet, en position ouverte, c'est-à-dire à l'horizontal, la porte repose principalement sur les rails de guidage. Dans cette position ouverte, une faible force d'entraînement est suffisante pour provoquer son déplacement en vue de sa fermeture. L'importance de la force utile à l'entraînement tend même à diminuer au cours du basculement de fermeture, le poids de la porte reposant de moins en moins sur les rails de guidage et aidant donc audit basculement. Inversement, en position fermée de la porte, c'est-à-dire à la verticale, le poids de la porte impose l'action d'un effort important pour le basculement en position ouverte. De même pour amener la porte de sa position fermée à ouverte, la force d'entraînement nécessaire à l'ouverture de la porte diminue au cours du basculement au fur et à mesure que le poids de la porte repose de plus en plus sur les rails de guidage, de ce fait le couple maximum nécessaire disponible est disproportionné selon la position du panneau de porte.

Les moteurs actuellement utilisés dans de tels dispositifs sont calibrés. Par exemple dans la demande de brevet US4511832, le moteur répond à un signal sous la forme d'une impulsion dont la durée à été au préalable calibrée afin de déterminer la vitesse de fonctionnement du moteur.

Toutefois ce calibrage est aujourd'hui établi de façon empirique, une tension d'alimentation nécessaire à l'obtention du couple maximum du moteur pour entraîner un basculement de la porte est définie et appliquée tout au long du déplacement. Ce calibrage ne permet pas une consommation prenant en compte la variation des besoins. Généralement, cette consommation correspond à la consommation maximale utile au déplacement de la porte, typiquement la consommation initiale de basculement en ouverture de la porte. Ce calibrage entraîne donc l'utilisation de beaucoup de puissance inutilement, la puissance consommée par exemple en fin de basculement en fermeture étant la même qu'en début de basculement d'ouverture alors que le besoin réel est quasi nul grâce à l'action du poids de la porte.

Or il est toujours préférable d'éviter une surconsommation dans ces dispositifs intégrant ce type de moteur.
Par exemple dans la demande de brevet US6013999, l'alimentation est réglée sur la mesure de l'angle électrique permettant ainsi de limité les pertes d'énergies du à la dissipation.
La surconsommation, en plus du faible rendement qu'elle impose, peut être génératrice d'un échauffement du moteur important. En outre, la différence entre la puissance utile et la puissance consommée engendre des vibrations génératrices d'une nuisance sonore significative.

Il est connu de contrôler la consommation du moteur par vérification de ladite consommation, en particulier dans le cadre de moteurs à courant continu. Ce contrôle s'effectue en comparant l'intensité du courant consommé à une valeur seuil fixe déterminée arbitrairement. Si l'intensité du courant dépasse cette valeur seuil, une alarme est déclenchée.

Cependant, un tel contrôle est peu précis et impose un temps de réaction ne permettant qu'une faible sécurité. En effet, si l'intensité du courant permettant le déplacement de la porte est faible et que la porte rencontre un obstacle, le temps nécessaire pour que l'intensité consommée dépasse la valeur seuil est important. Durant ce laps de temps, le moteur continue à fournir un couple d'entraînement de la porte et donc à écraser un obstacle et ce tant que l'intensité du courant alimentant ledit moteur n'atteint ou ne dépasse pas cette valeur seuil. Inversement, si l'intensité du courant alimentant la porte est déjà élevée, le dépassement de la valeur seuil peut survenir alors qu'aucun obstacle réel ne bloque le déplacement de la porte, par exemple la simple présence d'un vent plus ou moins important s'abattant sur ladite porte.

Dans leur utilisation, ces dispositifs nécessitent généralement un système de localisation de la porte. Une telle localisation permet de s'assurer que la porte a bien effectué le déplacement désiré, sans, par exemple à la suite d'une usure prononcée du dispositif, rester en position entrouverte ou au contraire continuer l'entraînement du moteur alors que la porte a terminé son déplacement. Un tel système de localisation de la porte impose l'adjonction d'un dispositif annexe, compliqué tant dans son installation que dans son intégration au dispositif d'entraînement. De plus un tel dispositif annexe représente un encombrement et un coût supplémentaire.

Par ailleurs, de tels dispositifs peuvent être sécurisés pour éviter l'écrasement de personne ou objet se trouvant sur la trajectoire en basculement par la présence de capteurs extérieurs, ce qui représente un surcoût non négligeable associé à une complexité d'installation et un encombrement conséquent.

Afin de résoudre ces problèmes, le dispositif selon l'invention prévoit l'utilisation d'un moteur avec un bon rendement, correspondant aux besoins réels d'entraînement en basculement de la porte. De plus, le dispositif selon l'invention ainsi que le procédé selon l'invention n'engendrent ni surchauffe, ni nuisance sonore générée par vibration du moteur. Par ailleurs le dispositif selon l'invention permet un contrôle simple et sécurisé du déplacement et de la localisation de la porte durant son basculement, et cela sans encombrement ni coût supplémentaire.

L'invention a pour objet un dispositif d'entraînement en déplacement d'un élément de fermeture du type battant, porte, vantail ou similaire comportant un moyen d'entraînement lié audit élément de fermeture, le moyen d'entraînement étant un moteur pas à pas présentant un arbre moteur, le dispositif comportant en outre un moyen d'asservissement de l'alimentation du moteur et un détecteur de rotation de l'arbre moteur qui est associé au moyen d'asservissement pour lui fournir des informations sur l'état de rotation de l'arbre, caractérisé en ce que le moyen d'asservissement comporte un moyen de commande de l'intensité selon une courbe d'alimentation de référence et un moyen de variation de l'intensité du courant d'alimentation du moteur appliqué selon cette courbe, et en ce que pour chaque pas de rotation de l'arbre moteur, le moyen d'asservissement module ou non l'intensité du courant alimentant le moteur en fonction des informations sur l'état de rotation de l'arbre.

Un moteur pas à pas est généralement utilisé dans des domaines nécessitant un degré de précision élevé tels que la chirurgie ou encore l'aviation. Dans ces applications, on fait varier la fréquence du courant alimentant le moteur afin de moduler vitesse de rotation de l'arbre moteur tout en conservant un fort couple d'entraînement et un courant constant.

Cependant une telle variation de la fréquence du courant ne permet pas de diminuer la consommation du moteur et donc d'améliorer le rendement. Cette variation ne permet pas non plus de réduire les vibrations ou l'échauffement du moteur. Au contraire, l'homme du métier a tendance à éviter l'utilisation de moteur pas à pas dans ce domaine d'application car ce type de moteur est considéré comme trop bruyant.

Dans le dispositif selon l'invention, un moyen d'asservissement lié au moteur pas à pas commande l'alimentation du moteur. Plus particulièrement, le moyen d'asservissement commande l'application d'une alimentation optimale préalablement définie et éventuellement modulée en fonction de la rotation ou de l'absence de rotation de l'arbre moteur du moteur pas à pas.

Lors de l'installation du dispositif, une courbe efficace de fonctionnement, ou courbe d'alimentation de référence, est déterminée. Cette courbe efficace de fonctionnement correspond à l'alimentation optimale du moteur tout au long d'un basculement de la porte dans des conditions normales d'utilisation, c'est-à-dire avec une intensité minimale apte à entraîner la porte en basculement. En utilisation, le moyen d'asservissement alimente le moteur en fonction de cette courbe efficace de fonctionnement. Le détecteur de rotation de l'arbre moteur informe le moyen d'asservissement de la rotation ou de l'absence de rotation de l'arbre moteur. Pour chaque pas de rotation de l'arbre moteur, le moyen d'asservissement module ou non l'intensité du courant alimentant le moteur en fonction de ces informations. Ce réglage de l'alimentation en fonction de la rotation de l'arbre moteur permet une alimentation du moteur correspondant précisément à la consommation minimale nécessaire à la rotation de l'arbre moteur. Cette correspondance assure un bon rendement ainsi qu'une absence de vibrations et d'échauffement non désirés.

En fermeture de la porte par basculement de sa position horizontale à sa position verticale, l'intensité du courant alimentant le moteur est initialement faible et diminue progressivement au cours du basculement. Inversement, en ouverture de la porte par basculement de sa position verticale à sa position horizontale, l'intensité du courant alimentant le moteur est initialement importante et diminue progressivement au cours du déplacement.

Avantageusement, le moyen d'asservissement comporte un moyen de commande de l'intensité selon une courbe d'alimentation de référence et un moyen de variation de l'intensité du courant. Ce moyen de variation de l'intensité du courant permet de faire augmenter, ou diminuer, l'intensité du courant alimentant le moteur par palier, c'est-à-dire par augmentation ou diminution d'une valeur d'intensité identique à pour chaque palier.

Lors de l'installation du dispositif, une phase de l'installation consiste à détecter l'intensité minimale nécessaire afin d'obtenir une rotation de l'arbre de rotation du moteur pour chaque pas de rotation dudit arbre. Cette phase permet de définir la courbe efficace de fonctionnement qui sera appliquée pour alimenter de façon optimale le moteur en utilisation.

Dans un mode de réalisation préférentiel, le dispositif selon l'invention comporte un système de vérification du nombre de pas de rotation de l'arbre moteur. Lors de l'installation du dispositif, un test est réalisé en conditions d'utilisation normale, c'est-à-dire sans éléments extérieurs intervenant sur le déplacement de la porte. Ce test permet de définir le nombre de pas de rotation réalisé normalement par l'arbre moteur lors d'un entraînement de la porte d'une position à une autre. Le système de vérification permet de vérifier à chaque entraînement de la porte entre ces deux positions que l'arbre a bien effectué le nombre de pas de rotation désiré et ainsi de vérifier précisément la position réelle de la porte. Ce système de vérification de la position de la porte selon l'invention est peu encombrant car directement intégré au moyen d'asservissement sans nécessiter la présence de capteur de position externe. Si, lors d'un entraînement de la porte, le nombre de pas de rotation réalisé est inférieur au nombre de pas du test, alors la porte n'a pas effectué le déplacement dans son ensemble, un problème est survenu durant ce déplacement. Cette vérification est particulièrement efficace dans le cadre d'un système d'entraînement sans glissement, c'est-à-dire sans perte d'énergie éventuelle, due par exemple à des glissements du moyen d'entraînement. Un tel système d'entraînement sans glissement est par exemple obtenu avec un entraînement par chaîne ou autre système à créneaux dans lesquels un déplacement du moyen d'entraînement provoque obligatoirement un déplacement de l'élément entraîné, par opposition à des systèmes du type courroie ou autre.

Dans une variante de réalisation, le dispositif selon l'invention comporte un système d'adaptation de la consommation, ou de l'alimentation, du moteur par vérification de la rotation de l'arbre moteur. En utilisation, si la rotation d'un pas de rotation nécessite une alimentation beaucoup plus importante que l'alimentation optimale, définie par la courbe de fonctionnement efficace, cela signifie qu'un élément extérieur empêche ou gène l'entraînement de la porte.

A chaque pas de rotation, le moteur est alimenté selon la courbe de fonctionnement efficace et une détection de la rotation de l'arbre moteur est effectuée. Si la rotation de l'arbre moteur est constatée normalement, le basculement de la porte continue normalement. Si une absence de rotation de l'arbre moteur est détectée, le moyen d'asservissement augmente l'intensité de l'alimentation d'un palier d'intensité et contrôle à nouveau la rotation de l'arbre avec cette nouvelle intensité. Le dépassement d'intensité maximal autorisé par le système d'adaptation de la consommation, ou de l'alimentation, par rapport à l'intensité de référence est déterminé par un nombre maximal de palier d'augmentation de l'intensité du courant.

Ce système est particulièrement appréciable en matière de sécurité. La différence entre l'alimentation de référence et l'alimentation réellement utile pendant l'entraînement est analysée par le système d'adaptation. Si, par exemple, une personne est coincée sous la porte lors d'une fermeture de la porte, la différence de consommation entre la consommation réelle permettant d'effectuer une rotation de l'arbre moteur et la consommation de référence est importante. Le système de vérification peut alors enclencher une alarme, inverser le mouvement de la porte, ou tout autre ordre visant à ne pas blesser ou abîmer l'élément extérieur intervenant sur le déplacement de la porte.

De plus, l'entraînement de la porte par pas de rotation présente l'avantage de ne pas engendrer une augmentation de l'écrasement en cas de blocage. Si un objet ou par exemple le doigt d'une personne empêche le basculement de la porte, le dispositif selon l'invention peut prévoir l'application d'un temps d'attente entre la constatation de l'absence de rotation et l'entraînement en basculement avec une intensité supérieure. Ainsi, le déplacement par pas de rotation évite l'écrasement direct du doigt par un entraînement continu tel que dans l'état de la technique mais, en outre, la présence d'un temps d'attente permet de retirer son doigt avant augmentation de l'intensité du courant et écrasement dudit doigt. Une courbe typique de l'événement peut être mémorisée et permettre une comparaison avec l'événement réel pour obtenir un temps de réaction optimum.

D'autres courbes de référence d'événements différents peuvent être mémorisées telles qu'une courbe correspondant à un déplacement d'une porte soumise à des vents ou contraintes.

Cependant, une porte de garage peut être régulièrement soumise à des contraintes extérieures légères comme la présence de vent plus ou moins violent, de feuilles coincées dans le rail de guidage ou autre. De même, une usure du dispositif ou une consommation de référence mal calibrée peut entraîner une consommation en utilisation légèrement supérieure à la consommation de référence. Cette consommation légèrement supérieure ne doit pas entraîner le déclenchement d'une alarme et/ou l'inversion du sens de basculement de la porte. Il est donc important de définir lors de l'installation du dispositif une valeur minimale d'augmentation d'intensité déclenchant l'alarme. Cette valeur seuil est déterminée par l'homme de l'art afin de n'enclencher l'alarme que pour une surconsommation correspondant à un évènement nécessitant l'enclenchement d'une telle alarme, comme par exemple la présence d'une personne sous la porte.

Le nombre maximal autorisé de contrôles consécutifs de la rotation de l'arbre moteur pour un même pas de rotation, qui correspond à un nombre maximal autorisé de paliers d'augmentation de l'intensité, détermine l'augmentation maximale d'intensité du courant par rapport à l'intensité de référence avant déclenchement d'une alarme. Ce nombre de contrôle correspond à une valeur seuil de différence d'intensité entre l'intensité optimale et l'intensité réellement consommée au-delà de laquelle l'alarme est déclenchée. Une telle alarme peut avoir plusieurs degrés d'activation. Par exemple, une augmentation d'un certain nombre de paliers consécutifs pour un même pas de rotation peut déclencher une alarme sonore sans entraîner d'inversion du mouvement. Malgré cette activation de l'alarme sonore, l'intensité du courant est encore augmentée pour tester ledit pas de rotation et ce jusqu'à atteindre un deuxième degré d'activation d'alarme entraînant lui l'inversion du mouvement de la porte. Le premier degré d'activation peut correspondre à une simple contrainte extérieure, par exemple un vent violent, ne devant pas entraîner l'arrêt du mouvement, mais l'activation du deuxième degré de l'alarme signifie que le blocage de la porte est plus important qu'un simple vent violent et lui nécessite une inversion du mouvement de la porte. Typiquement, un réaction distincte peut être prévue pour différents cas de figures correspondant à différentes contraintes plus ou moins graves.

Un tel système, directement intégré au moyen d'asservissement, est peu encombrant et évite l'utilisation de capteur extérieur complexe d'installation, couteux et encombrant. De plus, un tel système permet une réaction rapide et adaptée aux problèmes rencontrés par la porte, l'augmentation d'intensité étant limitée et l'intensité augmentée étant comparée à une intensité optimale, le déclenchement d'alarme est rapide sans être intempestif.

L'invention a aussi pour objet un procédé de déplacement d'un dispositif de fermeture selon l'invention comportant une étape d'alimentation d'un moteur pas à pas caractérisé en ce qu'il comporte
- une étape de détection de rotation de l'arbre moteur
- une étape de réglage de l'alimentation par le moyen d'asservissement de préférence par une variation de l'intentisté du courant alimentant le moteur.

Avantageusement, l'étape d'alimentation est basée sur une courbe de fonctionnement efficace obtenue lors de l'installation du dispositif.

Dans un perfectionnement, le procédé selon l'invention comporte une étape d'analyse de la rotation de l'arbre moteur.

Un autre perfectionnement prévoit que le procédé selon l'invention comporte une étape d'adaptation de la consommation ou de l'alimentation du moteur par vérification de la rotation de l'arbre moteur..

Dans une variante, le procédé selon l'invention comporte une étape d'augmentation de l'intensité du courant d'alimentation du moteur si l'arbre moteur n'effectue pas de rotation.

Avantageusement, le procédé selon l'invention comporte une étape d'alarme. Une telle étape est déclenchée si un problème survient, tel qu'un obstacle rencontré par la porte lors de son entraînement. Une telle étape peut se déclencher par exemple sous forme d'activation d'une alarme sonore, éventuellement accompagnée d'un arrêt de l'entraînement de la porte, voire de l'inversion de son sens d'entraînement.

Avantageusement, le procédé selon l'invention comporte une étape d'attente entre deux étapes de détection de la rotation consécutives d'un même pas de rotation.

La présente invention est maintenant décrite à l'aide d'exemples uniquement illustratifs et nullement limitatifs de la portée de l'invention, et à partir des illustrations ci-jointes, dans lesquelles :

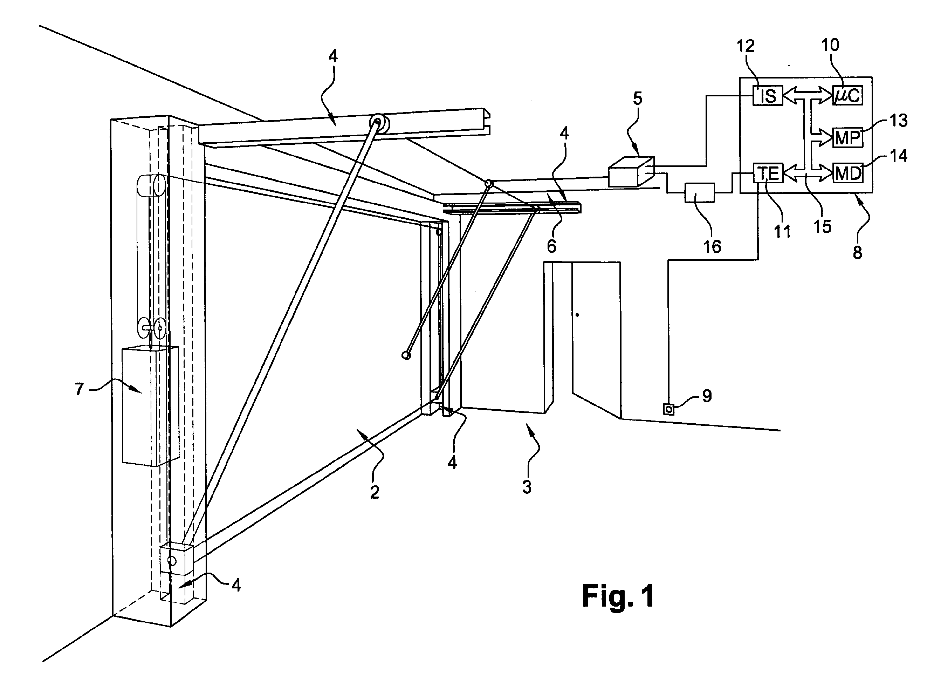

- La figure 1 représente une vue en perspective schématique d'un garage comportant un système d'entraînement selon l'invention;
- La figure 2 représente un schéma d'étapes de réalisation du procédé selon l'invention.

Une liste des références utilisées ci-après dans la description et dans les figures qui s'y rattache est donnée ci après:
1. Dispositif selon l'invention
2. Porte
3. Structure de construction/Murs de garage
4. Rail de guidage
5. Moyen d'entraînement/Moteur
6. Plafond
7. Contrepoids
8. Moyen d'asservissement
9. Source d'alimentation
10. Microprocesseur
11. Interface de d'entrée
12. Interface de sortie
13. Mémoire de programme
14. Mémoire de données
15. Bus de communication
16. Détecteur de rotation
17. Etape d'alimentation du moteur 5
18. Etape de détection de rotation de l'arbre moteur
19. Etape de réglage de l'alimentation
20. Etape d'analyse de la rotation de l'arbre moteur
21. Etape d'augmentation de l'alimentation du moteur
22. Etape d'adaptation de la consommation ou de l'alimentation de courant du moteur
23. Etape d'alarme
24. Etape de vérification du nombre de pas de rotation de l'arbre moteur

Le dispositif 1 selon l'invention est destiné à entrainer au moins partiellement en déplacement, par exemple par basculement, un élément de fermeture 2 tel qu'une porte 2, dans l'exemple montré une porte 2 de garage intégrée dans une structure de construction 3, par exemple les murs d'un garage.

Une telle porte 2 autorise ou bloque l'accès au garage en basculant par coulissement le long d'un dispositif de guidage 4, généralement des rails de guidage 4, situés de part et d'autre de la porte 2 et coopérant avec la porte 2 de manière connue de l'homme de l'art.

Dans une position fermée, la porte 2 bloque l'accès au garage et se développe sensiblement à la verticale. Afin de passer de sa position fermée à une position ouverte, ladite position ouverte laissant libre l'accès au garage, une force d'entraînement est appliquée à la porte 2 à l'aide d'un moyen d'entraînement 5, par exemple à l'aide d'un moteur 5. Cette force fait basculer la porte 2 de sa position fermée verticale à une position ouverte horizontale, généralement parallèlement à un plafond 6 du garage. Ce basculement est guidé par le dispositif de guidage 4. Afin d'assister l'entraînement de la porte 2 lors de l'ouverture, celle-ci est généralement liée à système de contrepoids 7, ou un système de ressort ou tout autre système adaptable par l'homme du métier. Il est évident, et aisément adaptable par l'homme de l'art, d'appliquer cette force d'entraînement pour l'ouverture, la fermeture, ou tout autre déplacement d'une porte, par basculement, coulissement de coté ou autre.

Selon l'invention, le moyen d'entraînement 5 est un moteur du type moteur « pas à pas ». Le dispositif 1 selon l'invention comporte un moyen d'asservissement 8, du type par exemple codeur incrémental 8, ainsi qu'un détecteur 16 de rotation d'un arbre moteur dudit moteur 5, le détecteur 16 étant relié au moyen d'asservissement 8.

Le détecteur 16 et le codeur 8 peuvent être indifféremment des éléments extérieurs au moteur 5 ou intégrés au moteur 5.

Le codeur incrémental 8 est situé entre une source d'alimentation 9, par exemple une prise ou un raccordement électrique, et le moteur 5. Le codeur 8 détermine et commande l'alimentation du moteur 5. Le codeur incrémental 8 comporte de préférence un microprocesseur 10, une interface d'entrée 11, une interface de sortie 12, une mémoire de programme 13, une mémoire de données 14 et un bus de communication 15. La mémoire de programme 13 contient un programme de gestion de l'alimentation du moteur 5.

L'alimentation du moteur 5 est définie pour chaque pas de rotation de l'arbre moteur. Cette définition pour chaque pas de rotation permet au dispositif selon l'invention de faire varier l'alimentation du moteur pour la faire correspondre à l'alimentation juste suffisante à la rotation de chaque pas de rotation. Cette alimentation est définie par mémorisation et application de l'alimentation optimale. Cette alimentation optimale est définie par une courbe de fonctionnement efficace déterminée lors de l'installation du dispositif. Un exemple de détermination de cette courbe de fonctionnement efficace est donné ci-après.

Le dispositif 1 selon l'invention comporte en outre le détecteur 16 de rotation d'un arbre moteur dudit moteur 5. Ce détecteur 16 est relié d'une part au moteur 5 et d'autre part au codeur 8. Le détecteur 16 analyse les rotations de l'arbre moteur et envoie les informations résultant de cette analyse au codeur 8, via l'interface d'entrée 11. Le codeur 8, à l'aide du programme de gestion de l'alimentation du moteur 5, analyse les informations du détecteur 16 et commande ou non en conséquence une modulation de l'alimentation du moteur 5. Avantageusement, le codeur 8 comporte un moyen de variation de l'intensité du courant d'alimentation du moteur 5. Typiquement, le codeur 8 analyse les informations envoyées par le détecteur 16 et définit éventuellement une modulation de l'intensité du courant alimentant le moteur 5 par rapport à l'alimentation optimale. Cette définition de l'intensité du courant permet de n'utiliser, pour effectuer une rotation d'un pas de rotation de l'arbre moteur, que la puissance utile du moteur 5, n'engendrant ainsi aucun échauffement du moteur 5, ni vibration génératrices de nuisances sonores, ni davantage une consommation inutile de courant.

Dans un perfectionnement, le dispositif 1 comporte un système de vérification du nombre de pas de rotation de l'arbre moteur. Ce système de vérification peut, par exemple, être un programme indépendant exécuté à chaque entraînement de la porte ou inclus dans le programme de gestion de l'alimentation du moteur 5. Ce système de vérification analyse le nombre de pas de rotation de l'arbre moteur durant un déplacement de la porte 2. Typiquement, lors de l'installation du dispositif 1, un test est effectué afin de déterminer la correspondance entre la position de la porte 2 et la rotation de l'arbre moteur, dans des conditions normales d'utilisation, c'est-à-dire sans élément extérieur intervenant dans le déplacement de la porte 2. Lors d'un entraînement ultérieur de la porte pour ce même déplacement, le système de vérification vérifie le nombre de pas de rotation ayant effectivement été effectués s'assurant ainsi que la porte 2 est bien à la position désirée. Une différence dans le nombre de pas de rotation réellement effectués au cours du déplacement par rapport au nombre de pas de référence obtenu lors du test signifie alors que la porte n'a pas effectué complètement son déplacement ou au contraire qu'elle s'est trop déplacée.

L'adjonction d'un programme ou d'un élément de programme contrôlant le nombre de pas de rotation effectués, et donc la connaissance de la position précise de la porte à tout moment de son déplacement, permet de s'assurer d'une part du bon fonctionnement de l'entraînement de la porte, et d'autre part représente un gain de place important par rapport à l'état de la technique dans lequel il faut installer un détecteur de position de la porte externe. Un tel système de vérification du nombre de pas de rotation de l'arbre moteur est particulièrement utile et efficace dans le cadre d'un dispositif d'entraînement sans glissement, chaque pas de rotation de l'arbre moteur correspondant alors de manière effective à un déplacement de la porte.

Dans un autre perfectionnement possible, le dispositif 1 selon l'invention comporte un système d'adaptation de la consommation ou de l'alimentation de courant par détection de la rotation de l'arbre moteur. Ce type de système est similaire au système de vérification du nombre de pas de rotation de l'arbre moteur, dans son fonctionnement comme dans son installation. Typiquement, ce système d'adaptation peut être réalisé par un programme ou une partie de programme exécuté par le codeur 8.

Un tel système d'adaptation de la consommation ou de l'alimentation par détection de la rotation de l'arbre moteur permet de déceler toute anomalie importante dans l'entraînement de la porte par le moteur en utilisation. Une anomalie importante peut s'expliquer, entre autres raisons, par la présence d'un obstacle bloquant le déplacement de la porte, par exemple par la présence d'une personne sur la trajectoire de la porte. Une telle anomalie se traduit par une absence de détection de rotation d'un pas de rotation de l'arbre moteur malgré un ou plusieurs contrôles consécutifs de ladite rotation dudit même pas de rotation, et donc une ou plusieurs augmentations consécutives de l'intensité alimentant le moteur pour le pas de rotation contrôlé. Il est important, dès lors qu'une telle anomalie est constatée, d'actionner une sécurité pour prévenir toute blessure ou dégradation. Une telle sécurité peut se traduire par l'arrêt de l'entraînement de la porte ou encore par l'inversion du sens de déplacement de la porte, le tout accompagné éventuellement d'une alarme sonore et/ou visuelle.

L'intégration d'un tel système d'adaptation au codeur 8 engendre un gain de place par rapport à l'état de la technique car ne nécessitant pas de moyen de sécurité extérieur complexe et encombrant.

De plus, un tel système peut indiquer une consommation anormale par exemple pour cause d'usure. En effet, si la force d'entraînement produite par le moteur alimenté selon la courbe de fonctionnement efficace ne permet pas, de manière régulière, la rotation de l'arbre moteur, et donc l'entraînement de la porte, et qu'une augmentation de l'intensité d'un nombre peu important de palier est régulièrement nécessaire et suffisante pour que le moteur produise une force d'entraînement apte à faire basculer la porte, cela signifie que l'alimentation du moteur nécessaire à l'entrainement de la porte est régulièrement et légèrement supérieure à l'alimentation évaluée lors de l'installation. Dans un tel cas, ou la consommation du moteur est supérieure à la consommation de référence mais inférieure à une consommation seuil entraînant le déclenchement d'une alarme, il est probable que le dispositif selon l'invention ait besoin d'être révisé ou qu'un élément gênant le déplacement de la porte sans la bloquer se soit introduit dans le rail de guidage ou autre. Ainsi en contrôlant la rotation de l'arbre moteur, le dispositif selon l'invention permet de détecter les problèmes ponctuels mais aussi les problèmes récurrents et/ou d'usure.

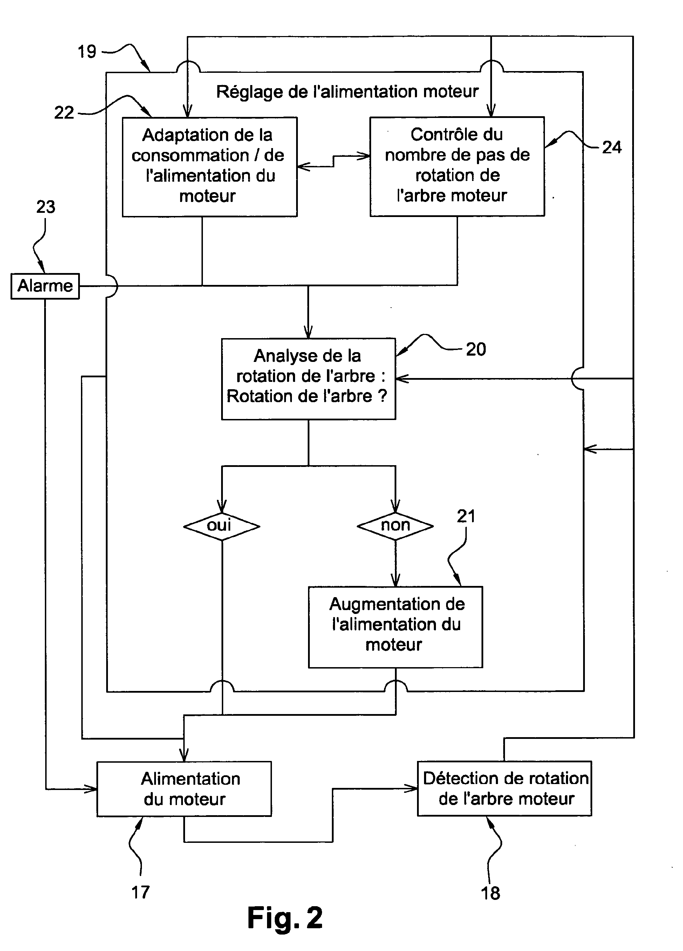

La figure 2 représente un schéma de fonctionnement du procédé selon l'invention.

L'invention a aussi pour objet un procédé d'entraînement utilisant un dispositif selon l'invention. Le procédé selon l'invention comporte
- une étape 17 d'alimentation d'un moteur pas à pas;
- une étape 18 de détection de rotation de l'arbre moteur;
- une étape 19 de réglage de l'alimentation par le moyen d'asservissement.

Le procédé selon l'invention est réalisé lors de l'exécution d'une commande d'entraînement de la porte 2, tel qu'un ordre d'ouverture ou de fermeture par un utilisateur. Cet ordre est transmis directement au moteur 5 ou au codeur 8 qui alimente le moteur 5. Cet ordre correspond à une alimentation du moteur selon une valeur d'alimentation déterminée par une courbe de fonctionnement efficace déterminée lors de l'installation du dispositif.

La courbe efficace de fonctionnement peut être obtenue selon la méthode suivante, lorsqu'une intensité donnée d'alimentation est fourni au moteur pour un pas de rotation précis :
- Si, pour ce pas de rotation de l'arbre moteur, une rotation de l'arbre moteur est détectée, l'intensité du courant alimentant le moteur pour la rotation dudit pas de rotation est diminuée d'un palier. Un nouveau contrôle de la rotation de l'arbre de rotation pour ce même pas de rotation est exécuté avec cette intensité diminuée.
   ○ Si lors de ce nouveau contrôle, une absence de rotation est constatée, alors l'intensité du contrôle précédent est gardée en mémoire comme étant l'intensité optimale dans la courbe de fonctionnement efficace pour ledit pas de rotation et l'intensité en cours est utilisée pour tester la rotation du pas suivant.
   ○ Si, au contraire, une rotation de l'arbre moteur est encore détectée, l'intensité alimentant le moteur est diminuée d'un nouveau palier et le contrôle du même pas de rotation recommence avec cette intensité inférieure.
- Si aucune rotation de l'arbre moteur n'est détectée pour ce pas de rotation, l'intensité du courant alimentant le moteur pour ce même pas de rotation est augmentée d'un palier et la rotation dudit pas de rotation testée à nouveau et ce jusqu'à l'obtention de la rotation de l'arbre moteur pour ledit pas de rotation, l'intensité permettant la rotation dudit pas de rotation est alors retenue comme intensité optimale pour ledit pas de rotation et l'intensité en cours est utilisée pour tester le pas de rotation suivant.
Une telle courbe pourrait aussi être obtenue par l'application d'une alimentation nulle augmentée progressivement jusqu'à obtention d'une rotation de l'arbre de rotation pour chaque pas de rotation durant un mouvement ou toute autre méthode d'obtention d'une telle courbe de fonctionnement efficace correspondant à l'alimentation optimale adaptable par l'homme du métier. Cette courbe est obtenue lors d'une étape d'initialisation de l'alimentation qui correspond à l'application d'une méthode permettant d'obtenir cette courbe de fonctionnement efficace et de sa mémorisation dans le codeur 8 pour application ultérieure.

L'alimentation du moteur 5 est ainsi optimisée, mémorisée et appliquée, selon cette courbe de fonctionnement efficace mémorisée, à chaque répétition ultérieure de l'entraînement ainsi enregistré. Cette mémorisation assure l'utilisation d'une alimentation optimisée lors de chaque entraînement.

En Utilisation, L'étape 17 d'alimentation du moteur est suivie d'une étape 18 de détection de rotation de l'arbre moteur. En fonction de l'alimentation du moteur, et plus particulièrement de l'intensité du courant alimentant le moteur, l'étape de détection permet de définir si cette alimentation est suffisante ou non pour entraîner la porte. Si aucune rotation de l'arbre moteur n'a lieu, alors la valeur d'alimentation est insuffisante. Inversement si la rotation de l'arbre moteur est constatée, alors la valeur d'alimentation était suffisante.

Le procédé selon l'invention comporte une étape 19 de réglage ou modulation de l'alimentation du moteur 5. Cette étape 19 de réglage de l'alimentation peut comporter, ou être, une étape de variation de l'intensité du courant alimentant le moteur 5. Une telle variation de l'intensité, par augmentation ou diminution, se fait par palier d'intensité. Chaque variation correspond toujours à une augmentation ou une diminution d'une même valeur d'intensité dite palier.

Avantageusement, le procédé selon l'invention comporte une étape 20 d'analyse de la rotation de l'arbre moteur. Cette analyse consiste à vérifier qu'une rotation de l'arbre moteur est effectuée ou non en fonction des résultats de l'étape 18 de détection de rotation de l'arbre moteur, et définir les caractéristiques de l'alimentation du moteur 5 en fonction de la présence ou l'absence de cette rotation de l'arbre moteur. Typiquement, si l'arbre moteur n'effectue pas de rotation pour un pas de rotation de l'arbre, cette analyse génère une étape 21 d'augmentation de l'intensité du courant alimentant le moteur 5 suivie d'une répétition des étape de détection 18, de réglage 19 et d'analyse 20 du procédé selon l'invention pour le même pas de rotation. Si au contraire l'arbre moteur effectue une rotation, le procédé selon l'invention est appliqué pour le pas de rotation suivant.

Le procédé selon l'invention comporte une étape 22 d'adaptation de la consommation ou de l'alimentation de courant du moteur 5 par détection de la rotation de l'arbre moteur. Cette étape permet de vérifier qu'une rotation d'un pas de rotation a bien lieu après un ou plusieurs contrôles de la rotation d'un même pas de rotation, et donc une ou plusieurs augmentations de l'intensité du courant, sans engendrer l'écrasement d'un éventuel obstacle.

L'adaptation de la consommation ou de l'alimentation du moteur 5 par détection de la rotation de l'arbre moteur à un moment « t » de l'entraînement permet de savoir si l'entraînement se passe correctement, c'est-à-dire sans rencontrer de contraintes extérieures telles qu'un obstacle sur la trajectoire de la porte 2. Cette adaptation permet d'enclencher une étape 23 d'alarme, par exemple sonore, si elle montre une absence de rotation malgré un nombre important de répétition consécutives de l'étape de détection de rotation de l'arbre moteur pour un même pas de rotation. Une telle répétition correspond à une augmentation du même nombre de paliers d'intensité que le nombre de répétition de l'étape de détection et donc à une intensité du courant plus importante que l'intensité de référence.,

Le codeur 8 peut déterminer qu'une absence de rotation de l'arbre constatée lors d'une ou deux répétitions consécutives de l'étape 18 de détection de rotation de l'arbre moteur pour un même pas de rotation, et donc une intensité d'alimentation nécessaire à la rotation supérieure de deux paliers à l'intensité optimale, correspond à une simple gêne du basculement de la porte pour cause de vent, usure ou autre. Au contraire, un nombre de contrôles consécutifs pour un même pas de rotation, par exemple quatre, peut lui être interprété comme représentant la présence d'un obstacle gênant le basculement de la porte de manière anormale et nécessitant un déclenchement d'alarme.

Une telle alarme peut s'accompagner d'un arrêt de l'entraînement, voire d'une inversion du sens d'entraînement afin de dégager l'obstacle. De la même manière, le procédé selon l'invention peut comporter une étape 24 de vérification du nombre de pas de rotation de l'arbre moteur effectuée, une telle étape fonctionnant de manière similaire à l'étape de vérification de la consommation du dispositif selon l'invention.

## Revendications

1. Dispositif (1) d'entraînement en déplacement d'un élément de fermeture (2) du type battant, porte (2), vantail ou similaire comportant un moyen d'entraînement (5) lié audit élément de fermeture, le moyen d'entraînement étant un moteur pas à pas présentant un arbre moteur, le dispositif comportant en outre un moyen d'asservissement (8) de l'alimentation du moteur et un détecteur (16) de rotation de l'arbre moteur qui est associé au moyen d'asservissement pour lui fournir des informations sur l'état de rotation de l'arbre, **caractérisé en ce que** le moyen d'asservissement comporte un moyen de commande de l'intensité selon une courbe d'alimentation de référence et un moyen de variation de l'intensité du courant d'alimentation du moteur appliqué selon cette courbe, et **en ce que** pour chaque pas de rotation de l'arbre moteur, le moyen d'asservissement module ou non l'intensité du courant alimentant le moteur en fonction des informations sur l'état de rotation de l'arbre.

2. Dispositif selon l'une des revendications précédentes **caractérisé en ce qu'**il comporte un système de vérification du nombre de pas de rotation de l'arbre moteur.

3. Dispositif selon l'une des revendications précédentes **caractérisé en ce qu'**il comporte un système d'adaptation de la consommation ou de l'alimentation de courant par détection de la rotation de l'arbre moteur.

4. Procédé de déplacement d'un dispositif de fermeture selon l'une des revendications précédente, **caractérisé en ce qu'**il comporte :
- une étape (17) d'alimentation du moteur pas à pas basée sur une courbe de fonctionnement efficace obtenue lors de l'installation du dispositif
- une étape (18) de détection de rotation de l'arbre moteur
- une étape (19) de réglage de l'alimentation par le moyen d'asservissement de préférence par une variation de l'intensité du courant alimentant le moteur.

5. Procédé selon la revendications 4 **caractérisé en ce qu'**il comporte une étape d'analyse (20) de la rotation de l'arbre moteur issues du détecteur de rotation de l'arbre.

6. Procédé selon l'une des revendications 4 à 5 précédente **caractérisé en ce qu'**il comporte une étape d'adaptation de la consommation ou de l'alimentation du moteur par détection d'une rotation de l'arbre moteur.

7. Procédé selon l'une des revendications 4 à 6 **caractérisé en ce qu'**il comporte une étape d'alarme (23).

8. Procédé selon l'une des revendications 4 à 7 **caractérisé en ce qu'**il comporte une étape (21) d'augmentation de l'intensité du courant d'alimentation du moteur si l'arbre moteur n'effectue pas de rotation.

## Patentansprüche

1. Antriebsvorrichtung (1) für die Bewegung eines Verschlusselements (2) wie zum Beispiel eines Türflügels, einer Tür (2), eines Fensterflügels oder dergleichen, mit einem mit dem Verschlusselement verbundenen Antriebsmittel (5), welches ein Schrittmotor mit einer Antriebswelle ist, wobei die Vorrichtung darüber hinaus ein Mittel zur Steuerung (8) der Stromversorgung des Motors und einen Sensor (16) für die Rotation der Antriebswelle umfasst, der dem Mittel zur Steuerung zugeordnet ist, um ihm Informationen über den Rotationsstatus der Welle bereitzustellen, **dadurch gekennzeichnet, dass** das Mittel zur Steuerung gemäß einer Referenzkurve für die Stromversorgung ein Steuermittel für die Stromstärke und ein Mittel zum Variieren der Stromstärke der Stromversorgung des Motors gemäß dieser Kurve umfasst, und dadurch, dass das Mittel zur Steuerung für jeden Rotationsschritt der Antriebswelle die Stromstärke, mit der der Motor versorgt wird, entsprechend den Informationen über den Rotationsstatus der Welle moduliert oder nicht.

2. Vorrichtung nach vorausgehendem Anspruch, **dadurch gekennzeichnet, dass** sie ein Prüfsystem für die Anzahl der Rotationsschritte der Antriebswelle umfasst.

3. Vorrichtung nach einem der vorausgehenden Ansprüche, **dadurch gekennzeichnet, dass** sie ein System zur Anpassung des Stromverbrauchs oder der Stromversorgung durch Detektieren der Rotation der Antriebswelle umfasst.

4. Bewegungsverfahren für ein Verschlusselement nach einem der vorausgehenden Ansprüche, **dadurch gekennzeichnet, dass** es umfasst:
- einen Schritt (17) der Stromversorgung des Schrittmotors basierend auf einer effektiven Funktionskurve, die beim Installieren der Vorrichtung erzielt wird
- einen Schritt (18) der Detektion der Rotation der Antriebswelle
- einen Schritt (19) des Einstellens der Stromversorgung durch das Mittel zur Steuerung, bevorzugt durch ein Variieren der Stromstärke des Versorgungsstroms des Motors.

5. Verfahren nach Anspruch 4, **dadurch gekennzeichnet, dass** es einen Schritt (20) zur Analyse der Rotation der Antriebswelle umfasst, die auf den Sensor für die Wellenrotation basiert.

6. Verfahren nach einem der Ansprüche 4 und 5, **dadurch gekennzeichnet, dass** es einen Schritt der Anpassung des Stromverbrauchs oder der Stromversorgung des Motors durch Detektion einer Rotation der Antriebswelle umfasst.

7. Verfahren nach einem der Ansprüche 4 bis 6, **dadurch gekennzeichnet, dass** es einen Alarmschritt (23) umfasst.

8. Verfahren nach einem der Ansprüche 4 bis 7, **dadurch gekennzeichnet, dass** es einen Schritt (21) zum Erhöhen der Stromstärke des Versorgungsstroms für den Motor umfasst, wenn die Antriebswelle keine Rotation durchführt.

## Claims

1. A device (1) for driving the movement of a closing element (2) such as a leaf, door (2), door or similar element comprising a driving means (5) connected to said closing element, wherein the driving means is a step motor with a driving shaft, the device further comprising servo means (8) for controlling the power supply to the motor and a sensor (16) that detects rotation of the driving shaft, which is associated with the servo means to supply it with information about the rotation status of the shaft, **characterised in that** the servo means comprises a means to control the intensity according to a reference power supply curve and a means to vary the intensity of the motor power supply current applied according to said curve, and **in that** for each rotation step of the driving shaft, the servo means modulates or not the intensity of the current supplied to the motor on the basis of the shaft rotation status information.

2. A device according to any of the preceding claims **characterised in that** it comprises a system for verifying the number of rotation steps of the driving shaft.

3. A device according to any of the preceding claims **characterised in that** it comprises a system for adapting the consumption or the supply of current by detecting the rotation of the driving shaft.

4. A method for displacing a closing device according to any of the preceding claims, **characterised in that** it comprises:
- a stage (17) where power is supplied to the step motor based on an efficient operating curve obtained when the device is installed
- a stage (18) where the rotation of the driving shaft is detected
- a stage (19) where the power supply is adjusted by the servo means, preferably by varying the intensity of the current supplied to the motor.

5. A method according to claim 4 **characterised in that** it comprises a stage (20) where the rotation of the driving shaft derived from the shaft rotation detector is analysed.

6. A method according to any of claims 4 to 5 above **characterised in that** it comprises a stage where the consumption or supply to the motor is adjusted by detecting the rotation of the driving shaft.

7. A method according to any of claims 4 to 6 **characterised in that** it comprises an alarm stage (23).

8. A method according to any of claims 4 to 7 **characterised in that** it comprises a stage (21) where the intensity of the motor power current is increased if the driving shaft does not rotate.
